# EUROPÄISCHE PATENTSCHRIFT

(11) **EP 1 599 549 B1**
(45) Veröffentlichungstag und Bekanntmachung des Hinweises auf die Patenterteilung: **05.09.2007**
(21) Anmeldenummer: 04717629.2
(22) Anmeldetag: 05.03.2004
(51) Int. Cl.: C09B 67/00

(54) **PIGMENTZUBEREITUNG UND VERFAHREN ZU DEREN HERSTELLUNG**
PIGMENT PREPARATION AND METHOD FOR PRODUCING THE SAME
PREPARATION DE PIGMENT ET PROCEDE DE PRODUCTION ASSOCIE

(30) Priorität: 05.03.2003 DE 10309813
(43) Veröffentlichungstag der Anmeldung: 30.11.2005
(73) Patentinhaber: Heubach GmbH, 38685 Langelsheim (DE)
(72) Erfinder: HEUBACH, Rainer, A-5084 Grossgmain (AT); BRUSSAARD, Yvonne, 38704 Liebenburg (DE); BRUSSAARD, Hugo, 75428 Illingen (DE)
(74) Vertreter: Hagemann, Heinrich
(86) Internationale Anmeldenummer: PCT/EP2004/002303
(87) Internationale Veröffentlichungsnummer: WO 2004/078852

(56) Entgegenhaltungen:
- EP-A- 0 212 361
- EP-A- 0 816 440
- EP-A- 0 985 712
- US-A- 4 015 998
- US-A- 4 194 920
- US-A- 4 226 634
- US-B1- 6 503 970

## Beschreibung

Die Erfindung betrifft eine Pigmentzubereitung auf Basis mindestens eines anorganischen Pigments und mindestens eines organischen Pigments sowie ein Verfahren zu Herstellung einer solchen Pigmentzubereitung.

Pigmentzubereitungen auf Basis mindestens eines organischen Pigments und mindestens eines anorganischen Pigmentes, die sowohl durch Trockenmischungen als auch durch gemeinsame Naßvermahlung hergestellt werden können, sind im Stand der Technik bekannt. In EP 0 816 440 B1 wird die Herstellung von Pigmentzubereitungen auf der Grundlage von Bismutvanadat mit organischen Gelb-, Orange und Rotpigmenten beschrieben. Durch Herstellung einer Trockenmischung von Bismutvanadat mit P.O. 73 erhält man eine Pigmentzubereitung mit erhöhter Farbreinheit im Vergleich zu einer Mischung aus pigmentierten Lackansätzen. Die US-A 4226634 beschreibt die Herstellung einer Pigmentzubereitung mit verbessertem Glanz aus einem organischen mit einem anorganischen Pigment unter Einwirkung hoher Scherkräfte in einem wässrigen Medium. Weiterhin beschreibt die EP 0 985 712 B1 Pigmentzubereitungen in Granulatform einer mittleren Granulatteilchengröße von 5 bis 3.000 µm, mit verbesserter Fließfähigkeit und geringerer Staubungsneigung. Außerdem beschreibt US 6 503 970 B1 die Erfindung von Pigmentkompositionen mit verbesserter Hitzestabilität und bevorzugt den Einsatz von chlorfreien organischen Pigmenten. Die bekannten Pigmentzubereitungen sollten sich zum Einfärben von polymeren Materialien, wie Lacken, Druckfarben und Kunststoffen, eignen.

Im Hinblick auf den Stand der Technik hat es sich jedoch gezeigt, dass Pigmentzubereitungen durch Mischung von anorganischen Buntpigmenten, insbesondere in Form von Nickel- und Chromtitan, mit organischen Pigmenten nachteilig sind und die Nachteile nur durch zusätzliches Einbinden von Titandioxid als deckendes und farbreines anorganisches Pigment mehr oder weniger reduziert werden können. Die Nachteile von herkömmlichen Pigmentzubereitungen mit Nickel- und Chromtitan als Mischungskomponente beziehen sich hauptsächlich auf die Trübung und den Glanzverlust gegenüber Zubereitungen auf Basis von Titandioxid und machen sich besonders dann bemerkbar, wenn es um die Nachstellung der hochreinen Bleichromat- oder Bleimolybdatfarbtöne geht. Somit kann man ohne den Einsatz von Titandioxid in Pigmentzubereitungen auf der Basis mindestens eines anorganischen und mindestens eines organischen Pigmentes den gewünschten Farbton nicht erreichen. Ein weiterer Nachteil besteht in dem hohen Abrieb sowie der niedrigeren Deckkraft, was insbesondere für die Nickeltitan-Pigmente gilt.

Die Erfindung hat sich daher die Aufgabe gestellt, Pigmentzubereitungen auf der Basis mindestens eines anorganischen Pigments und mindestens eines organischen Pigments vorzuschlagen, die die oben angesprochenen Nachteile nicht aufweisen und die nicht auf die Einbindung von Titandioxid angewiesen sind. Insbesondere soll die Verarbeitbarkeit und die Leistungsfähigkeit von Nickel- und Chromtitan-Pigmenten in der Vermischung mit organischen Pigmenten gesteigert werden. Es sollen auch positive Synergie-Effekte durch die Verbesserung der Lichtechtheit und dem Erreichen einer erhöhten Farbtiefe angestrebt werde, bedingt durch die Absorption von Nickel- bzw. Chromtitan im UV- und Blau-Bereich. Der Einsatz soll insbesondere Vorteile in der Licht- und Wetterechtheit sowie in der Deckkraft zeigen. Es soll eine wesentliche Verbesserung der Echtheitseigenschaften ohne die coloristische Notwendigkeit des Einsatzes von Titandioxid erreicht werden.

Erfindungsgemäß wird diese Aufgabe durch eine Pigmentzubereitung auf Basis mindestens eines anorganischen Pigments und mindestens eines organischen Pigments gelöst, wobei diese Pigmentzubereitung dadurch gekennzeichnet ist, dass sie Teilchen enthält, bei denen anorganische Pigmentteilchen mit feinteiligeren organischen Pigmentteilchen behaftet sind und die Teilchen zusätzlich eine organische makromolekulare Beschichtung aufweisen.

Der Kern der Erfindung besteht demzufolge darin, dass auf der Oberfläche der anorganischen Pigmentteilchen organische Pigmentteilchen haften, die feinteiliger sind bzw. eine kleinere Teilchengröße als das als Kern zu wertende anorganische Pigmentteilchen aufweisen. Darüber hinaus weist diese spezielle Struktur, die im Stand der Technik nicht beschrieben ist, zusätzlich noch eine organische molekulare Beschichtung auf. Diese muß sich nicht komplett ausgebildet haben. Eine weitgehend vollständige Beschichtung ist jedoch von Vorteil. Diese organische makromolekulare Beschichtung entsteht z.B. im Rahmen des nachfolgend noch geschilderten erfindungsgemäßen Verfahrens durch die Einbindung geeigneter oberflächenaktiver Substanzen in Form einer makromolekularen organischen Verbindung. Dieser Punkt wird später noch diskutiert.

Die besonderen Vorteile, die mit der erfindungsgemäßen Pigmentzubereitung in verschiedenen Einsatzgebieten in Erscheinung treten, könnten u.a. auch auf diese organische makromolekulare Beschichtung zurückgehen, ohne hierin eine bindende Erklärung sehen zu wollen. So wird die genannte Beschichtung zu einer Fixierung der organischen Pigmentteilchen auf den anorganischen Pigmentteilchen führen können und der üblicherweise mit einem Trockenprozess einhergehenden Reagglomierung der organischen Pigmentteilchen entgegenwirken. In der späteren Handhabung und Anwendung führt dies zu geringerer Staubungsneigung und besserer Dispergierbarkeit.

Im Rahmen der Erfindung lassen sich im Wesentlichen alle in der vorliegenden Technologie bekannten anorganischen Pigmente einsetzen. Es ist jedoch bevorzugt, wenn das anorganische Pigment als Mischphasen-Metalloxid-Pigment vorliegt, insbesondere als dotierte Titandioxid-Pigmente. Hierunter sind insbesondere bevorzugt das Nickel-Antimon-Titanoxid (C.I. Pigment Gelb 53) und/oder das Chrom-Antimon-Titanoxid (C.I. Pigment Braun 24). Gleichermaßen sind jedoch als anorganisches Pigment die vorstehend im Zusammenhang mit dem Stand der Technik der EP 0 985 712 B1 bezeichneten Pigmente geeignet. Von besonderem Vorteil ist der Einsatz von Zinn-Zink-Titanat (PY 216). Dieses kann auch zusätzlich zu anderen anorganischen Pigmenten eingesetzt werden, um die wünschenswerten Eigenschaften einzustellen.

Auch bei der Wahl der organischen Pigmente stehen dem Fachmann zur Verwirklichung der vorliegenden Erfindung vielfältige Pigmente zur Verfügung. Besonders bevorzugt sind organische Pigmente in Form polycyclischer und/oder Azo-Pigmente. Bei der Verwirklichung der Erfindung haben sich dabei als organische Pigmente insbesondere solche in Form von Rot-, Gelb-, Orange-, Blau-, Braun und/oder Grün-Pigmenten erwiesen. Vorzugsweise liegen die Rot-Pigmente in Form von DPP-Rot (Diketopyrolopyrol), die organischen Gelb-Pigmente in Form von Isoindolinonen und/oder Benzimidazolon, die Orange-Pigmente in Form von DPP-Orange und/oder als Isoindoline und/oder Benzimidazolone, die Blau- und Grün-Pigmente als Cu-Phthalocyanine, die Braun-Pigmente als Benzimidazolone und/oder Disazokondensationsverbindungen vor. Um den jeweils gewünschten Farbton einzustellen, können die oben bezeichneten Pigmente auch in Gemischen eingesetzt werden. Im Regelfall ist es sogar bevorzugt, zwei oder drei verschiedene Pigmente in der erfindungsgemäßen Pigmentzubereitung zur Einstellung des gewünschten Farbtons heranzuziehen. Neben den anorganischen Pigmenten gibt es eine große Zahl organischer Pigmente, die für die Verwirklichung der erfindungsgemäßen Zubereitung in Betracht kommen können. Die nachfolgende Auflistung besonders geeigneter anorganischer und organischer Pigmente macht dies deutlich.
Rutilpigmente in Form von C.I. Pigment Yellow 53, 157, 159, 160, 161, 162, 163, 164, und 189 und C.I. Pigment Brown 24, 29, 33, 37 und 40;
Spinellpigmente in Form von C.I. Pigment Yellow 119, C.I. Pigment Brown 33, 34 35 und 39 und C.I. Pigment Blue 28, 36 und 72, C.I. Pigment Green 26, 50;
Bismutvanadatpigmente in Form von C.I. Pigment Yellow 184, sowie Derivate mit Iso- und Heteropolyanionen des Vanadates bzw. dessen isomorphen Ersatzes.
Cersulfidpigmente in Form von C.I. Pigment Orange 75 und C.I. Pigment Red 265;
Anthrachinonpigmente in Form von C.I. Pigment Yellow 147 und 199;
Anthranthronpigmente in Form von beispielsweise C.I. Pigment Red 168;
Anthrapyrimidinpigmente in Form von C.I. Pigment Yellow 108;
Azopigmente in Form von C.I. Pigment Yellow, 3, 12, 13, 14, 62, 74, 83, 93, 95, 120, 151, 154, 168, 175, 180, 181, 194 und 191:1, C.I. Pigment Orange 5, 13, 34, 36, 62, 64, 67, 72, C.I. Pigment Red 1, 2, 3, 4, 5, 23, 48:1, 48:2, 48:3, 48:4, 49, 49:1, 51:1, 52:1, 53, 53:1, 57:1, 58:2, 58:4, 112, 144, 146, 148, 166, 176, 187, 184, 214, 220, 221, 251 und 262; C.I. Pigment Braun 23, 25;
Azomethinpigmente in Form von C.I. Pigment Yellow 129;
Chinacridonpigmente in Form von C.I. Pigment Orange 48 und 49 und C.I. Pigment Red 42, 122, 202 und 206; C.I. Pigment Violett 19
Chinophthalonpigmente in Form C.I. Pigment Yellow 138;
Diketopyrrolopyrrolpigmente in Form von C.I. Pigment Orange 71 und 73 und C.I. Pigment Red 254, 255, 264, 270 und 272;
Indanthronpigmente in Form von C.I. Pigment Blue 60 und 64;
Isoindolinpigmente in Form von C.I. Pigment Yellow 139 und 185, C.I. Pigment Orange 61 und 69 und C.I. Pigment Red 260;
Isoindolinonpigmente in Form von C.I. Pigment Yellow 109, 110 und 173;
Metallkomplexpigmente in Form von C.I. Pigment Yellow 117, 150, 153 und 177;
Perinonpigmente in Form von C.I. Pigment Orange 43 und C.I. Pigment Red 194;
Perylenpigmente in Form von C.I. Pigment Red 123, 149, 178, 179, 190 und 224;
Phthalocyaninpigmente in Form von C.I. Pigment Blue 15, 15:1, 15:2, 15:3, 15:4, 15:6 und 16;
Pyranthoronpigmente in Form von C.I. Pigment Orange 51 und C.I. Pigment Red 216;
Pyrazolochinazolonpigmente in Form von C.I. Pigment Orange 67 und C.I. Pigment Red 251 und
Thioindigopigmente in Form von C.I. Pigment Red 88.
Homogene kristalline organische Mischphasenpigmente, bei denen geeignete Moleküle, vornehmlich polycyclischen Typs, im weitesten Sinne zu einer "festen Lösung" vereint sind und eine eigene, im vorliegenden Erfindungssinne der organischen Komponente zu rechnende Pigmentphase bilden. Insbesondere sind die roten, orangen und gelben Pigmente folgenden Pigmentklassen zuzuordnen: Diketo-pyrrolo-pyrrol, Quinacridone, Benzimidazolone, Disazokondensate, Isoindoline, Isoindolinone, Metal Complex als High Performance Pigment sowie die folgenden Azo-Pigmente PY 65, PY 74, PY 83, PY 97, PY 116, PY 183, PY 190, PY 191 sowie PR 112 und PR 170.

Um die mit der erfindungsgemäßen Pigmentzubereitung angestrebten Vorteile zu erzielen bzw. die vorstehend bezeichnete Aufgabe zu lösen, ist eine Relativierung der Teilchengröße der anorganischen Pigmente und der organischen Pigmente in so fern vorzunehmen, als die organischen Pigmenteilchen feinteiliger, d.h. kleiner als die anorganischen Pigmentteilchen sein sollen. Um hier eine gewisse Richtlinie anzugeben, wird es bevorzugt, dass die mittlere Teilchengröße der anorganischen Pigmente zwischen etwa 0,08 und 10 µm, insbesondere zwischen etwa 0,2 und 4 µm liegt, wobei der Bereich von 0,5 bis 2 µm besonders bevorzugt ist. Demgegenüber ist es bevorzugt, dass die Teilchen des organischen Pigments eine mittlere Teilchengröße von etwa 0,005 bis 3 µm insbesondere etwa 0,025 bis 0,3 µm aufweisen. Der Fachmann wird demzufolge, ausgehend von der Teilchengröße des anorganischen Pigmentes ein solches organisches Pigment bezüglich der Teilchengröße aussuchen, dessen mittlere Teilchengröße bevorzugt um den Faktor 3 bis 40 unter derjenigen des anorganischen Pigments liegt, so dass der Kerngedanke der Erfindung, nämlich das Haften von feinteiligeren organischen Pigmentteilchen auf anorganischen Pigmentteilchen verwirklicht werden kann. Aus der Teilchengröße des jeweils gewählten anorganischen Pigments und desjenigen des feinteiligeren organischen Pigments resultiert dann auch die Teilchengröße des Verbundes aus anorganischem Pigment und feinteiligerem organischem Pigment. Hierbei ist es bevorzugt, dass die Teilchen, die die anorganischen Pigmentteilchen zusammen mit den feinteiligeren organischen Pigmentteilchen aufweisen, eine mittlere Teilchengröße von etwa 0,3 bis 10 µm, insbesondere etwa 0,5 bis 5 µm aufweisen. Ganz besonders bevorzugt ist es, wenn diese Teilchengröße zwischen etwa 0,5 und 2,5 µm liegt.

Das Gewichtsverhältnis zwischen organischem Pigment und anorganischem Pigment in der erfindungsgemäßen Pigmentzubereitung ist nicht kritisch begrenzt. Von Vorteil ist es jedoch, wenn auf 1 Gew.-Teil organisches Pigment etwa 0,5 bis 150 Gew.-Teile anorganisches Pigment entfallen.

Die quantitative Zusammensetzung kann sich jedoch auch im Hinblick auf den jeweils gewählten Farbton optimieren lassen. So gilt typisch für gesättigte Farbtöne 1 Gew.-Teil organisches Pigment auf etwa 1 bis 4 Gew.-Teile anorganisches Pigment und für hellere Farbtöne oder Pastelltöne (wie z.B. nach NCS) 1 Gew.-Teil organisches Pigment auf etwa 20 bis 100 Gew.-Teile anorganisches Pigment, je nach Abstufung der Helligkeit.

In Einzelfällen kann es auch zweckmäßig sein, in die erfindungsgemäße Pigmentzubereitung noch Füllmittel einzubinden, insbesondere in Form von Bariumsulfat, Silica, Talkum, Calciumcarbonat und/oder Aluminiumoxid. Diese Füllmittel können dazu dienen, bestimmte Eigenschaften wie Farbstärke, Deckkraft und Abriebfestigkeit den Zielvorstellungen entsprechend anzupassen.

Sind bestimmte Eigenschaften zusätzlich anzustreben, die die erfindungsgemäße Pigmentzubereitung nicht schon vermitteln, dann können auch zusätzlich andere Pigmente zu der gewünschten Eigenschaftssteuerung herangezogen werden. Beispielsweise kann als zusätzliches Pigment Titandioxid zur Steuerung der Farbreinheit, Bismutvanadat zur Steuerung der Farbsättigung und/oder Lithopone zur Steuerung des Aufhellungsgrades von Vorteil sein. Selbstverständlich wird die Menge des zusätzlich einverleibten Füllstoffs und/oder Pigments nur so weit gewählt, dass die mit der erfindungsgemäßen Pigmentzubereitung angestrebten Eigenschaften nicht wesentlich beeinträchtigt werden.

Es wurde bereits auf die Bedeutung der organischen makromolekularen Beschichtung der Teilchen der erfindungsgemäßen Pigmentzubereitung hingewiesen. Hier besteht gleichfalls durch Auswahl der oberflächenaktiven Mittel eine Steuerungsmöglichkeit im Hinblick auf die angestrebten Eigenschaften. Die oberflächenaktiven Materialien der Wahl sind hochmolekulare Verbindungen, typischerweise verwandt mit der Familie der Netz- und Dispergierhilfsmittel, und gehören bevorzugt zu den chemischen Klassen der organisch modifizierten Polyacrylate, der modifizierten Fettsäurederivate, der Blockcopolymere mit oberflächenaktiven Funktionen und/oder zu Alkylammoniumsalzen polyfunktioneller Polymere.

In den Beispielen werden diese Stoffklassen weiter exemplarisch durch handelsübliche Produkte präzisiert, ohne dass hierdurch die Lehre des Patentes in irgend einer Weise eingeschränkt würde. Bevorzugt eingesetzt werden Kombinationen von organisch modifizierten Polyacrylaten mit Polymaleinsäure-Ammoniumsalzen, Alkylammonium-salze von Copolymeren mit sauren Gruppen zusammen mit Polymaleinsäure-Ammoniumsalzen, sowie von ethoxylierten und phosphatisierten langkettigen Alkylaminsalzen von polymerem Oleylalkohol für sich oder in Kombination mit Polymaleinsäure-Ammoniumsalzen.

Die Gruppen, welche diese Polymeren aufweisen, können auch als "Pigment-affine Gruppen" bezeichnet werden. Sie sollten demzufolge einerseits zu einer starken Bindung zwischen einem anorganischen und einem anorganischen Pigment und andererseits auch zur Einstellung der wünschenswerten Dispergierbarkeit in den Materialien führen, in die die erfindungsgemässe Pigmentzubereitung eingebracht wird. Es handelt sich insbesondere um flüssige, jedoch bevorzugt lösungsmittelfreie Polymere, hierbei insbesondere oberflächenaktive Substanzen, die ein starkes Adsorptionsvermögen auf organischen sowie anorganischen Pigmentoberflächen zeigen. Dieser Verbindungstyp bewirkt insbesondere in wässrigen Pigmentdispersionen bereits in sehr geringen zugesetzten Mengen eine starke Absenkung der Viskosität. Insbesondere sollte diese Substanz universell sowohl mit wässrigen als auch mit lösemittelhaltigen Lacksystemen verträglich sein. Seine Einsatzmenge unterliegt keiner kritischen Beschränkung. Es gilt als bevorzugt, wenn etwa 0,1 bis 10 Gew.-%, bezogen auf den Pigmentanteil (organisches zzgl. anorganisches Pigment), insbesondere etwa 0,2 bis 6,0 Gew.-%, einbezogen werden. Weitergehend bevorzugt ist der Bereich von etwa 0,5 bis 3,3 Gew.-%, wobei eine Menge von etwa 0,8 bis 1,7 Gew.-%, insbesondere etwa 1,0 bis 1,5 Gew.-%, ganz besonders bevorzugt ist.

Es gibt noch zusätzliche Möglichkeiten, hier eine Steuerung vorzunehmen. So kann in Einzelfällen vorzugsweise die Oberfläche der Teilchen, die die anorganischen oder organischen Pigmente aufweisen, zusätzlich mit einer Siloxanbeschichtung versehen werden. Alternativ zu einer Polysiloxanverbindung kann auch ein funktionalisiertes Polysilan oder ein emulgiertes Polyethylenwachs eingesetzt werden. Diese Beschichtung fördert vor allem auch die Absenkung der Abrasivität der Teilchen und dient der Verbesserung der Dispergierbarkeit in den verschiedenen Medien, denen die erfindungsgemäße Pigmentzubereitung einverleibt werden soll. Vorzugsweise geht die Siloxanbeschichtung auf eine Polysiloxanverbindung zurück, insbesondere modifiziert mit Polyethersegmenten. Hierbei wird es bevorzugt, dass die Polysiloxanverbindung und/oder Polysilan-Verbindung mit Alkyl- und/oder Arylgruppen versehen sind. Dabei sind die Alkylgruppen insbesondere C₁-C₁₂-Alkylreste, vorzugsweise C₁-C₅-Alkylreste. Bei dem Arylrest handelt es sich vorzugsweise um eine Naphthyl-, Benzyl- und/oder Phenylgruppe.

Bei der Herstellung der erfindungsgemäßen Pigmentzubereitung wird unter Beachtung der physikalischen und/oder chemischen Eigenschaften, die vorstehend behandelt wurden, insbesondere so vorgegangen, dass die Teilchen der anorganischen und organischen Pigmente, gegebenenfalls unter Zugabe von weiteren Komponenten, in Gegenwart einer oberflächenaktiven Substanz in Form einer makromolekularen organischen Verbindung nassvermahlen werden, die erhaltene wässrige Suspension getrocknet und desagglomeriert wird, insbesondere unter Beachtung der vorstehend dargestellten besonders vorteilhaften Teilchengrößen. Das Nassvermahlen erfolgt vorzugsweise in einem wässrigen Medium, wobei es jedoch in Einzelfällen von Vorteil ist, dass dem wässrigen Medium zusätzlich mit Wasser mischbare organische Lösungsmittel zur Einstellung der gewünschten Oberflächenspannung und/oder das Benetzungsverhalten zugegeben werden. Dabei kann es sich um organischen Lösungsmittel, die protisch oder aprotisch sind, handeln, oder auch Mischungen hiervon. Zu den geeigneten protischen organischen Lösungsmitteln zählen beispielsweise einwertige aliphatische Alkohole, insbesondere C₂-C₁₂-Alkohole sowie mehrwertige Alkohole, insbesondere C₂-C₃-Alkylenglykole und Etheralkohole, insbesondere C₂-C₃-Alkylenglykol-C₁-C₄-Alkylether. Als besonders geeignete Verbindungen sind anzugeben: Ethanol, Propanol, Butanol und/oder Diethylenglykol. Zu den geeigneten aprotischen organischen Lösungsmitteln zählen beispielsweise cyclische Ether, wie Tetrahydrofuran. In der wässrigen Suspension, die dem Nassvermahlen unterzogen wird, liegt die Menge an Pigmenten vorzugsweise zwischen etwa 10 und 70 Gew.-%, insbesondere etwa 30 bis 60 Gew.-%. Zwingend ist es für das erfindungsgemäße Verfahren, dass das Nassvermahlen in Gegenwart einer oberflächenaktiven Substanz erfolgt, die makromolekularen Charakter zeigt und organisch ist. Sie dient dazu, sowohl die organischen als auch die anorganischen Pigmentteilchen zu benetzen und einen engen Kontakt zwischen beiden Komponenten herzustellen.

Nach dem gesteuerten Abschluß des Mahlvorgangs im Hinblick auf die vorteilhafterweise angestrebte Teilchengröße des Verfahrenserzeugnisses unter Beachtung der oben angesprochenen Relationen zwischen der Teilchengröße des anorganischen und des organischen Pigments wird das Nassvermahlen der wässrigen Suspension in einem geeigneten Zeitablauf abgeschlossen. Als Regel könnte man angeben, dass das Mahlen dann abgeschlossen ist, wenn durch den Mahlvorgang alle Agglomerate, die größer als 5 bis 10 µm sind, aufgeschlossen wurden. Dabei erfüllen die größeren anorganischen Pigmentteilchen außerdem die Funktion eines Mahlhilfsmittels für das organische Pigment. Als Mahlaggregate kommen Kugelmühlen sowie Rührwerkskugelmühlen in geschlossener aber auch offener Bauweise mit sowohl vertikaler wie horizontaler Anordnung sowie Radial-Rührwerksmühlen in Betracht. Besonders bevorzugt werden Rührwerkskugel-mühlen mit horizontaler Bauweise zum Einsatz gebracht. Danach erfolgt ein Trocknen, was mit üblichen Trocknungseinrichtungen erfolgen kann, insbesondere mit einem Band-, Vakuum- oder Sprühtrockner oder anhand des Spin-Flash-Verfahrens oder des Wirbelschichtverfahrens. Auf jeden Fall muß es gewährleistet sein, dass anschließend das Desagglomerieren soweit erfolgt, dass sich die wünschenswerten Eigenschaften des erhaltenen Pulvers einstellen, bzw. die vorstehend bezeichnete Aufgabe, von der die Erfindung ausgeht, gelöst wird.

Das Desagglomerieren der im Rahmen der Herstellung der erfindungsgemäßen Pigmentzubereitung darin enthaltenen Agglomerate erfolgt beispielsweise mittels Hammermühlen, Stiftmühlen, Prallmühlen oder Sichtermühlen, kann aber auch bereits in das Trocknungsverfahren intergriert sein, z.B. in Form einer Mahltrocknung.

Die erfindungsgemäße Pigmentzubereitung ist in vielfältigen technischen Bereichen zum Einfärben beliebiger Materialien einsetzbar. Hierbei erweist sich die erfindungsgemäße Pigmentzubereitung insbesondere im Bereich der Lack-, Farb-, Papier-, Kunststoff-, Druckfarben- sowie Baustoffindustrie von besonderem Vorteil. Die Vorteile sind insbesondere darin zu sehen, dass die Pigmentzubereitung hohen Glanz und Farbreinheit aufweist und sehr gutes Dispergierverhalten sowohl in lössemittelhaltigen als auch in wässrigen Systemen sowie Kunststoffen zeigt. Diese Eigenschaften können ebenfalls bei der Papiereinfärbung oder Bedruckung, sowie bei der Laminatherstellung vorteilhaft genutzt werden.

In Bezug auf die Handhabung der erfindungsgemäßen Produkte wird die Staubungsneigung durch die organische makromolekulare Beschichtung gegenüber einem reinen organischen Pigment und/oder einer handelsüblichen Pigment-Trockenmischung deutlich reduziert.

Darüber hinaus liegen die Schüttdichten der erfindungsgemäßen Pigmentzubereitungen in der für reine anorgansche Pigmente üblichen Größenordnung, was die Handhabung im Vergleich zu organischen Pigmenten oder Pigment-Trockenmischungen deutlich vereinfacht. Die typischen Werte der Schüttdichten der erfindungsgemäßen Pigmentzubereitungen liegen zwischen 0,5 und 1,2 g/cm³, bevorzugt zwischen 0,6 und 0,9 g/cm³.

Die Erfindung soll nachfolgend anhand verschiedener, die Erfindung in typischer Weise charakterisierende Beispiele noch näher erläutert werden, ohne dass hierdurch die Erfindung in irgendeiner Weise eingeschränkt würde.

### Beispiel 1

### Formulierung eines Rotfarbtons

1 Teil P.R. 272 (DPP Rot) wird zusammen mit 4 Teilen P.Br. 24 (Chromtitan) unter Zugabe von 0,05 bis 0,1 Teil Disperbyk 185 (hochmolekulares Block-Copolymer mit Pigmentaffinen Gruppen) mit 3 bis 10 Teilen Wasser gemischt. Die erhaltene Slurry wird naßvermahlen und anschließend getrocknet und desagglomeriert.

### Beispiel 2

### Formulierung eines Gelbfarbtons

1 Teil P.Y. 154 (Benzimidazolon) wird zusammen mit 2 Teilen P.Y. 53 (Nickeltitan) unter Zugabe von 0,03 bis 0,06 Teilen Tego Dispers 745W (organisch modifiziertes Polyacrylat) mit 3 bis 10 Teilen Wasser gemischt. Die erhaltene Slurry wird naßvermahlen und anschließend getrocknet und desagglomeriert.

### Beispiel 3

Nach der Oberflächenbenetzung durch ein Dispergieradditiv kann eine zweite Beschichtung mit einer Siloxan-Verbindung erfolgen. Dafür wird die aus der Naßvermahlung erhaltenen Pigmentpaste mit einem Polydimethyl-Siloxan (z.B. PDMS-T21-trimethylsiloxy bezogen von ABCR oder einem vergleichbaren Hersteller) versetzt und nach einem zweiten Naßmahlschritt wiederum getrocknet und desagglomeriert. Das auf diese Weise erhaltenen erfindungsgemäße Produkt weist gegüber einem handelsüblichen nicht beschichteten Pigment geringere Abrasivität und bessere Dispergierbarkeit auf (Tabelle 1).

**Tabelle 1: Abrasivität und Farbstärke Entwicklung des erfindungsgemäßen Produkts aus Beispiel 3 gegenüber einer herkömmlichen Mischung bzw. gegenüber dem reinen organischen Pigment.**

| | Abrasivität * | Farbstärke Entwicklung ** |
|---|---|---|
| Handelsübliche Pigmentmischung | 0,111 % | 35 % |
| Erfindungsgemäßes Produkt nach Beispiel 3 | 0,051 % | 67 % |
| P.R. 272 (DPP-Rot) | n.d. | 28 % |

| | | |
|---|---|---|
| Anmerkung: * Die Abrasivität wurde bestimmt durch den Abrieb an Stahlkugeln hervorgerufen von dem Pigment, dispergiert in einem Mineralölgemisch. Dabei wurde die Probe intensiv für den Zeitraum von 1 h auf einer Scandex-Dispergiermaschine geschüttelt. ** Erreichte Farbstärke in % gegenüber der ausdispergierten Probe nach 20 min Dissolvern bei ca 12 m/s in einem mittelöligen Alkyd-Weißlack. | | |

### Beispiel 4 (Teilchengröße und Aussehen)

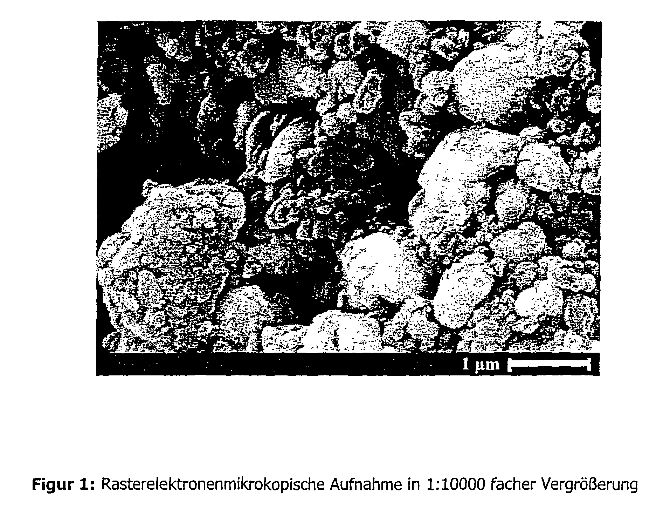

Eine REM-Aufnahme des erfindungsgemäßen Produkts zeigt in 1:10.000 facher Vergrößerung das Vorhandensein von anorganischen Pigmentteilchen, die mit den feineren organischen Pigmentteilchen behaftet sind. Dies zeigt die beiliegende Figur 1. Ferner ist zu erkennen, dass die organischen Pigmentteilchen der hier untersuchten Pigmentzubereitung gemäß Beispiel 1 um den Faktor 3 bis 20 kleiner sind, als die anorganischen Pigmentteilchen.

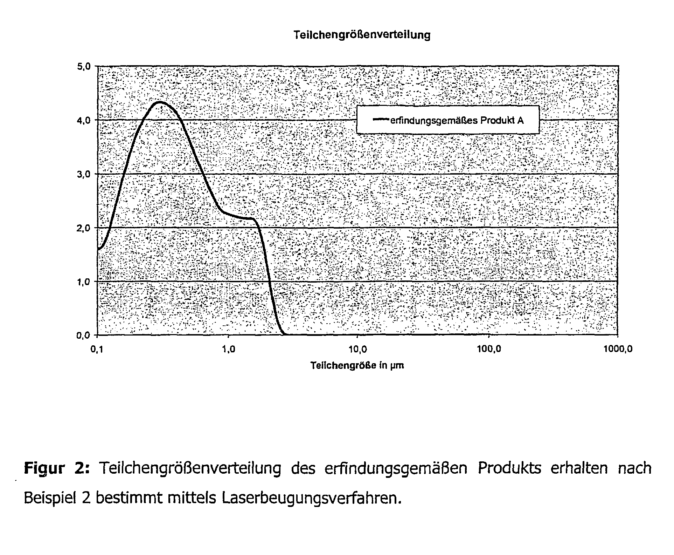

Die Teilchengrößenverteilung des erfindungsgemäßen Produkts nach Beispiel 2 wurde mittels Laserbeugungsverfahren bestimmt und zeigt eine mittlere Teilchengröße von 0,4 µm mit einem Kornspektrum von 0,1 bis 2,5 µm. (Medianwert der Korngrößenverteilung: 0,4 µm, Maximalgröße bei 2,5 µm). Hierzu sei auf die beiliegende Figur 2 verwiesen.

### Beispiel 5 (Vergleichsbeispiel)

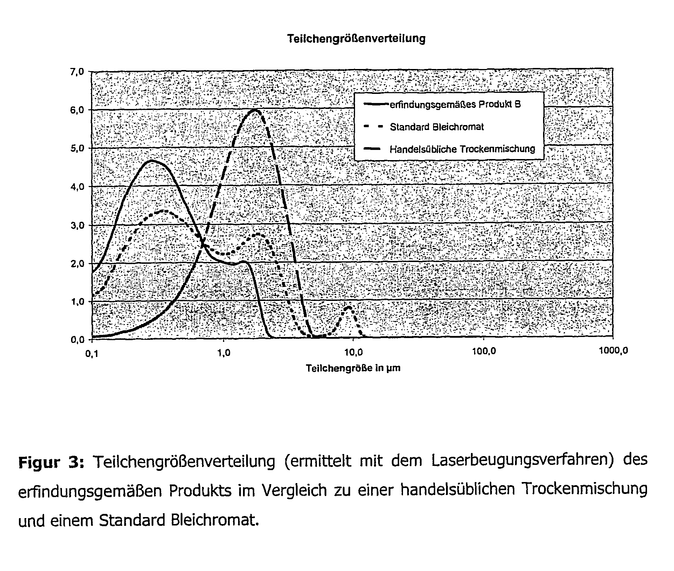

Es wurde die Teilchengrößenverteilung des erfindunggemäßen Produktes, erhalten nach Beispiel 2, mit derjenigen eines Standard-Bleichromats und einer handelsüblichen Trockenmischung, die im gleichen Farbraum liegt, verglichen. Dieser Vergleich ergibt sich aus der beiliegenden Figur 3.

### Beispiel 6 (Vergleichsbeispiel)

Das nach Beispiel 1 erhaltene erfindungsgemäße Produkt weist im Vergleich zu einem Standard-Molybdat-Rot oder einer in dem Farbraum befindlichen handelsüblichen Trokkenmischung ein deutlich besseres Deckvermögen und eine wesentlich höhere Farbstärke auf.

**Tabelle 2: Deckvermögen und Farbstärke des erfindungsgemäßen Produkts im Vergleich zu marktüblichen Standards**

| | **Deckvermögen** rel. Zu Titandioxid | **Farbstärke** |
|---|---|---|
| erfindungsgemäßes Produkt nach Beispiel 1 | 178 % | 189% |
| Heucotron T 8025 (Molybdatrot) | 116% | = 100% |
| Ecopaque 12303 Handelsübliche Trockenmischung | 89% | 98% |

### Beispiel 7 (Vergleichsbeispiel)

Die Wetterechtheiten, der erfindungsgemäßen Produkte sind deutlich besser als die einer im gleichen Farbraum befindlichen Mischung mit Titandioxid und erreichen die hervorragenden Echtheitseigenschaften einer stabilisierten Bleichromat-Type. Die Bestimmung erfolgte in Form einer Schnellbewitterung an einem pigmentierten Lack (wasserverdünnbares Styrolacrylat).

**Tabelle 3: Echtheitseigenschaften der erfindungsgemäßen Pigmentzubereitung im Vergleich zu einer Mischung mit Titandioxid. Dargestellt ist die Farbtonverschiebung nach Schnellbewitterung im ATLAS 1200 CPS Xenontestgerät in Anl. an DIN EN ISO 11341 (Ausgabe 2/98) mit folgenden Parametern: Energiedichte 60W/m²; UV-Filter 3x Suprax; Nass-/Trockenzyclus 18:102 min.**

| | **Delta E nach 3500 h XENO-Test** in Anl. an ISO 11341 |
|---|---|
| erfindungsgemäßes Produkt | 0,8 |
| 1 Teil P.Y. 95 3 Teile Titandioxid | 5,1 |
| Heucotron HT 5 SN (stabilisiertes hochechtes Bleichromat) | 1,1 |

### Beispiel 8 (Vergleichsbeispiel)

Die Farbsättigung und die Farbtonreinheit konnten gegenüber einer handelsüblichen Trockenmischung auf der Basis von Nickeltitan und organischen Pigmenten sowie gegenüber einer Mischung mit Titandioxid und organischen Pigmenten deutlich verbessert werden.

**Tabelle 4: Farbmeßdaten des erfindungsgemäßen Produkts im Vergleich zu auf dem Stand der Technik beruhenden Trockenmischungen**

| **Erfindungsgemäßes Produkt:** Purton in einem Alkyd-Melamin-Einbrennlack | | | | | | |
|---|---|---|---|---|---|---|
| ***vs.* Standard:** | **DL*** | **Da*** | **Db*** | **DC*** | **DH*** | **DE** |
| Handelsübliche Trockenmischung auf Basis von Nickeltitan | **0,84** | 4,08 | 5,36 | **6,20 gelber** | -2,63 **reiner** | 6,97 |
| Mischung mit Titandioxid | **-1,10** | 4,70 | 5,62 | **6,59 gelber** | -3,19 **reiner** | 7,41 |

### Beispiel 9 (Vergleichsbeispiel)

Das erfindungsgemäße Produkt erhalten nach Beispiel 1 zeigt geringeres Staubungsverhalten und höhere Schüttdichten als ein reines organisches Pigment oder eine handelsübliche Pigmenttrockenmischung.

**Tabelle 5: Staubungsverhalten und Schüttdichte.**

| | **Staubungswert** (DIN 55992-1) **mg/100g** | **Schüttdichte** DIN ISO 787 Teil 11 **g/cm³** |
|---|---|---|
| erfindungsgemäßes Produkt | 420 | 0,8 |
| P.R. 272 (DPP Rot) | 2200 | 0,2 |
| Ecopaque 12303 Handelsübliche Trockenmischung | 1700 | 0,3 |
| Chromtitan P.Br. 24 | 100 | 0,9 |

Anmerkung: Die Werte DL*, Da*, Db*, CC*, DH* und DE wurden bestimmt nach DIN 6174.

### Beispiel 10

0,1 bis 1 Teil organisches Pigment wird zusammen mit 1,5 bis 4 Teilen (P.Y. 53) Nikkeltitan oder Chromtitan (P.Br. 24) unter Zugabe von 0,02 bis 0,06 Teilen Tego^{®} Dispers 745W (organisch modifiziertes Polyacrylat) und 0,005 bis 0,01 T Nuosperse® FX 600 (Polymaleinsäure-Ammoniumsalz) für Produkte Nr. 1, 2 und 5 oder 0,01 bis 0,05 T Nuosperse® 2008 (Fettaminsalz eines polymeren Oleylalkohols, ethoxiliert und phosphatiert) für die Produkte Nr. 3 und 4 mit 3 bis 10 Teilen Wasser gemischt. Die erhaltene Slurry wird naßvermahlen und anschließend getrocknet und desagglomeriert. Die Zusammensetzung entspricht den Beispielen 1 bis 5 wie in Tabelle 1a aufgeführt. Die coloristischen Daten der so erhaltenen erfindungsgemäßen Produkte sind im Vergleich zu einer handelsüblichen Trockenmischung auf Basis von Nickeltitan und organischen Pigmenten in der nachfolgenden Tabelle dargestellt.

**Tabelle 6: Farbmeßdaten des erfindungsgemäßen Produkts im Vergleich zu auf dem Stand der Tedhnik beruhenden Trockenmischungen**

| | Zusammensetzung | | coloristische Daten vs. konv. Mischung | | | | | | |
|---|---|---|---|---|---|---|---|---|---|
| Nr. | organisches Pigment | anorg. Pigment | DL* | Da* | Db* | DC* | DH* | DE | visuelle Beurteilung |
| Gelbfarbtöne | | | | | | | | | |
| 1 | 1T P.Y. 138 | 4T P.Y. 53 | -0,24 | -0,03 | 2,10 | 2,10 | -0,05 | 2,11 | reiner, gelber |
| 2 | 1T P.Y. 180 | 2T P.Y. 53 | 1,01 | 0,62 | 2,20 | 2,26 | -0,35 | 2,50 | reiner, gelber |
| 3 | 1T P.Y. 180 0,1T P.Y. 139 | 2T P.Y. 53 | 1,20 | 0,43 | 1,93 | 1,98 | 0,13 | 2,32 | reiner, gelber |
| Rotfarbton | | | | | | | | | |
| 4 | 1T P.R. 254 | 3T P.Br. 24 | -0,26 | 1,35 | -0,47 | 0,92 | -1,10 | 1,45 | röter, brillianter |
| Grünfarbton | | | | | | | | | |
| 5 | 1T P.Y. 151 0,5T P.G. 36 | 3T P.Y. 53 | -0,80 | -1,85 | -2,20 | -0,10 | 2,87 | 2,98 | grüner, brillianter |

Die Tabelle 6 zeigt die coloristischen Daten der erfindungsgemäßen Produkte im Vergleich zu konventionellen Mischungen. Aus diesen Daten geht hervor, daß die Produkte deutlich reiner und brillianter sind und dies für alle genannten Pigmentkombinationen und unterschiedliche Farbtöne gültig ist.

In der Tabelle 7 sind die Vorteile der erfindungsgemäßen Produkte in Glanz und Deckvermögen gegenüber einer auf dem Stand der Technik beruhenden Trockenmischung zusammengefasst. Auch diese Daten zeigen, dass diese Vorteile für unterschiedliche Pigmentkombinationen und Farbtöne gelten.

**Tabelle 7: Glanz und Deckvermögen des erfindungsgemäßen Produkts im Vergleich zu auf dem Stand der Technik beruhenden Trockenmischungen**

| | Zusammensetzung | | | | |
|---|---|---|---|---|---|
| Nr. | organisches Pigment | anorg. Pigment | Glanz 20° | Glanz 60° | Rel. Deckvermögen |
| 1 | 1T P.Y. 138 | 4T P.Y. 53 | 76,4 | 94,7 | 112% |
| 1b | konventionelle Trockenmischung | | 57,3 | 85,8 | = 100 |
| 4 | 1T P.R. 254 | 3T P.Br. 24 | 84,7 | 95,9 | 117% |
| 4b | konventionelle Trockenmischung | | 45,7 | 82,2 | = 100 |
| 5 | 1T P.Y. 151 0,5T P.G. 36 | 3T P.Y. 53 | 82,8 | 93,6 | 137% |
| 5b | konventionelle Trockenmischung | | 46,1 | 84,2 | = 100 |

### Beispiel 11 (Vergleichsbeispiel)

Herstellung einer Pigmentmischung 6a nach dem erfindungsgemäßen Verfahren: 1 Teil P.Y. 138 wird zusammen mit 4 Teilen P.Y. 53 (Nickeltitan) unter Zugabe 0,02 bis 0,06 Teilen Tego^{®} Dispers 745W (organisch modifiziertes Polyacrylat) und 0,005 bis 0,01 T Nuosperse^{®} FX 600 (Polymaleinsäure-Ammoniumsalz) mit 3 bis 10 Teilen Wasser gemischt. Die erhaltene Slurry wird naßvermahlen und anschließend getrocknet und desagglomeriert.

Herstellung einer Pigmentmischung 6b gleicher Zusammensetzung, jedoch nach Herstellungsverfahren wie in Patent DE 28 44 943 (1) beschrieben:
1 Teil P.Y. 138 wird zusammen mit 4 Teilen P.Y. 53 (Nickeltitan) mit 10 Teilen Wasser gemischt. Die erhaltene Slurry wird naßvermahlen (Scandex) und anschließend getrocknet und desagglomeriert.

| Standard: Pigmentmischung bb nach DE 28 55 943 | | | | | | | |
|---|---|---|---|---|---|---|---|
| erfindungsgemäßes Produkt 6a vs. 6b | DL* | Da* | Db* | DC* | DH* | DE | visuelle Beurteilung |
| im Purton | -1,33 | 2,38 | 3,08 | 2,99 | -2,50 | 4,11 | reiner, gelber |
| 1:10 Aufhellung | -0,15 | 0,49 | 1,66 | 1,53 | -0,82 | 1,74 | reiner, gelber |
| Farbstärke | 110% | | | | | | |

Farbsättigung und Reinheit sind gegenüber dem nach dem Herstellungsverfahren der DE 28 55 943 C3 erhaltenen deutlich verbessert. Außerdem bietet das erfindungsgemäße Produkt eine höhere Farbstärke.

### Beispiel 12 (Vergleichsbeispiel)

Herstellung einer Pigmentzubereitung 7a nach dem erfindungsgemäßen Verfahren 1 Teil P.Y. 138 und 0,2 T P.O. 43 werden zusammen mit 1 Teilen P.Y. 53 (Nickeltitan) unter Zugabe von 0,01 bis 0,03 T Nuosperse® 2008 (Fettaminsalz eines polymeren Oleylalkohols, ethoxiliert und phosphatiert) mit 3 bis 10 Teilen Wasser gemischt. Die erhaltene Slurry wird naßvermahlen und anschließend getrocknet und desagglomeriert.

Herstellung einer Pigmentmischung 7b gleicher Zusammensetzung, jedoch nach Herstellungsverfahren wie in Patent DE 28 55 943 (1) beschrieben:
1 Teil P.Y. 138 und 0,2 T P.O. 43 werden zusammen mit 1 Teilen P.Y. 53 (Nickeltitan) mit 3 Teilen Wasser gemischt. Die erhaltene Slurry wird naßvermahlen (Scandex) und anschließend getrocknet und desagglomeriert.

| Standard: Pigmentmischung 7b nach DE 28 55 943 | | | | | | | |
|---|---|---|---|---|---|---|---|
| erfindungsgemäßes Produkt 7a vs. 7b | DL* | Da* | Db* | DC* | DH* | DE | visuelle Beurteilung |
| im Purton | -0,86 | 1,75 | 0,11 | 0,79 | -1,57 | 1,95 | röter, brillianter |
| 1:10 Aufhellung | -0,05 | -0,58 | 0,10 | 0,09 | 0,58 | 0,59 | reiner, gelber |
| Farbstärke | 102% | | | | | | |

Farbsättigung und Reinheit sind gegenüber dem nach dem Herstellungsverfahren der DE 28 55 943 C3 erhaltenen deutlich verbessert. Außerdem bietet das erfindungsgemäße Produkt eine deutlich verbesserte Dispergierbarkeit. Um diese zu bestimmen, wird eine Probe des Pulverpigments und geringer Schereinwirkung in einen Weißlack eingerührt und dabei in gewissen Zeitabständen Proben gezogen. Diese werden gegen die ausdispergierte Endprobe farbmetrisch vermessen. Aus der graphischen Auswertung dieser Proben ergibt sich die Farbstärkeentwicklung, die ein Maß für die Dispergierbarkeit des Pigments ist.

| | Farbstärkeentwicklung** |
|---|---|
| erfindungsgemäßes Produkt 7a | 60,5% |
| Pigmentmischung 7b nach DE 28 55 943 | 27,4% |

| | |
|---|---|
| ** Erreichte Farbstärke in % gegenüber der ausdispergierten Probe nach 20 min Dissolvern bei 2000 rpm (geringe Schereinwirkung) in einem mittelöligen Alkyd-Weißlack. | |

### Beispiel 13 (Herstellung einer Pigmentzubereitung 8 nach dem erfindungsgemäßen Verfahren)

1 Teil P.R. 254 wird zusammen mit 2 Teilen P.Br. 24 (Chromtitan) unter Zugabe von 0,02 bis 0,06 Teilen Tego^{®} Dispers 745W (organisch modifiziertes Polyacrylat) und 0,005 bis 0,01 T Nuosperse^{®} FX 600 (Polymaleinsäure-Ammoniumsalz) mit 3 bis 10 Teilen Wasser gemischt. Die erhaltene Slurry wird naßvermahlen und anschließend getrocknet und disagglomeriert.

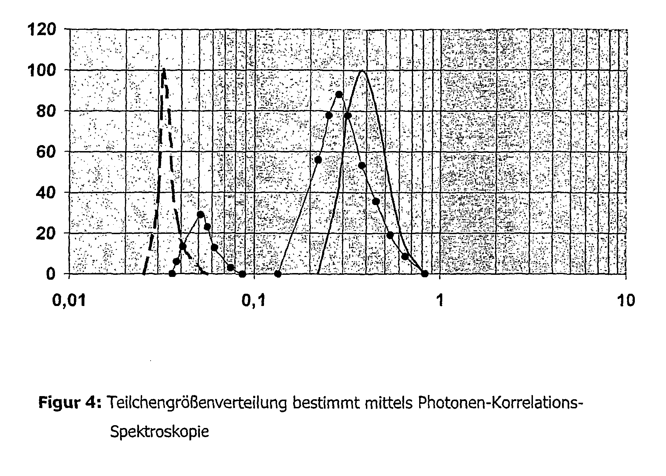

Wie in der Figur 4 dargestellt, weist das reine organische Pigment typisch eine Teilchengrößenverteilung auf, die zwischen 0,01 und 0,1 µm liegt. Anorganische Mischphasenmetalloxid-Pigmente liegen typisch zwischen 0,1 und 1,0 µm. Die Teilchengrößenverteilung in Figur 4, bestimmt mittels Photonen-Korrelations-Spektroskopie, zeigt, daß eine Trockenmischung von organischen und anorganischem Pigment zu einer bimodalen Verteilung führt. Das erfindungsgemäße Produkt 8 zeigt eine monomodale Verteilung mit einer mittleren Teilchengröße, die etwas über dem reinen anorganischen Pigment liegt. Die Existenz von Teilchen mit einer Größe kleiner als 0,1 µm, die dem reinen anorganischen Pigment zuzuordnen wäre, konnte in dem Produkt 8 nicht gefunden werden. Dies belegt die Aussage, daß die organischen Pigmentteilchen auf der Oberfläche der ca. 10-fach größeren organischen Pigmentteilchen haften.

## Patentansprüche

1. Pigmentzubereitung auf Basis mindestens eines anorganischen Pigments und mindestens eines organischen Pigments, **dadurch gekennzeichnet, dass** die Pigmentzubereitung Teilchen enthält, bei denen anorganische Pigmentteilchen mit feinteiligeren organischen Pigmentteilchen behaftet sind und die Teilchen zusätzlich eine organische makromolekulare Beschichtung aufweisen.

2. Pigmentzusammensetzung nach Anspruch 1, **dadurch gekennzeichnet, dass** sie als anorganisches Pigment Mischphasen-Metalloxid-Pigmente enthält.

3. Pigmentzubereitung nach Anspruch 2, **dadurch gekennzeichnet, dass** sie als Mischphasen-Metalloxid-Pigment dotierte Titandioxid-Pigmente enthält.

4. Pigmentzusammensetzung nach Anspruch 3, **dadurch gekennzeichnet, dass** die dotierten Titandioxid-Pigmente in Form von Nickel-Antimon-Titanoxid (C.I. Pigment Gelb 53) und/oder Chrom-Antimon-Titanoxid (C.I. Pigment Braun 24) vorliegen.

5. Pigmentzubereitung nach mindestens einem der vorhergehenden Ansprüche, **dadurch gekennzeichnet, dass** die mittlere Teilchengröße der anorganischen Teilchen zwischen etwa 0,08 bis 10 µm, insbesondere zwischen etwa 0,2 und 4 µm liegt.

6. Pigmentzubereitung nach mindestens einem der vorhergehenden Ansprüche, **dadurch gekennzeichnet, dass** die organischen Pigmente polycyclische und/oder Azo-Pigmente sind.

7. Pigmentzubereitung nach mindestens einem der vorhergehenden Ansprüche 1 bis 6, **dadurch gekennzeichnet, dass** die Rot-Pigmente in Form von DPP-Rot (Diketopyrrolopyrrol), die organischen Gelb-Pigmente in Form von Isoindolinon und/oder Benzimidazolon, die Orange-Pigmente in Form von DPP-Orange und/oder als Isoindoline und/oder Benzimidazolone, die organischen Blau- und Grünpigmente als Cu-Phthalocyanine und die organischen Braun-Pigmente als Benzimidazolon und/oder Disazokondensationsverbindung vorliegen, insbesondere sind die roten, orangen und gelben Pigmente folgenden Pigmentklassen zuzuordnen: Diketo-pyrrolo-pyrrol, Quinacridone, Benzimidazolone, Disazokondensate, Isoindoline, Isoindolinone, Metal Complex als High Performance Pigment sowie die folgenden Azo-Pigmente PY 65, PY 74, PY 83, PY 97, PY 116, PY 183, PY 190, PY 191 sowie PR 112 und PR 170.

8. Pigmentzubereitung nach mindestens einem der vorhergehenden Ansprüche, **dadurch gekennzeichnet, dass** die Teilchen des organischen Pigments eine mittlere Teilchengröße von etwa 0,005 bis 3 µm, insbesondere etwa 0,05 bis 0,3 µm aufweisen und damit um den Faktor 3 bis 40 kleiner sind als die anorganischen Pigmentteilchen.

9. Pigmentzubereitung nach mindestens einem der vorhergehenden Ansprüche, **dadurch gekennzeichnet, dass** die Teilchen, die die anorganischen Pigmentteilchen mit den feinteiligeren organischen Pigmentteilchen aufweisen, eine mittlere Teilchengröße von etwa 0,3 bis 10 µm, insbesondere etwa 0,5 bis 2,5 µm aufweisen.

10. Pigmentzubereitung nach mindestens einem der vorhergehenden Ansprüche, **dadurch gekennzeichnet, dass** auf ein Gewichtsteil organisches Pigment etwa 0,5 bis 150 Gewichtsteile anorganisches Pigment, insbesondere etwa 1 bis 15 Gewichtsteile anorganisches Pigment bei der Formulierung von gesättigten Farbtönen entfallen.

11. Pigmentzubereitung nach mindestens einem der vorhergehenden Ansprüche, **dadurch gekennzeichnet, dass** auf ein Gewichtsteil organisches Pigment etwa 0,5 bis 150 Gewichtsteile anorganisches Pigment, insbesondere etwa 20 bis 100 Gewichtsteile anorganisches Pigment bei der Formulierung von Pastellfarbtönen entfallen.

12. Pigmentzubereitung nach mindestens einem der vorhergehenden Ansprüche, **dadurch gekennzeichnet, dass** sie zusätzlich ein Füllmittel enthält, insbesondere in Form von Bariumsulfat, Talkum, Silica, Calciumcarbonat und/oder Aluminiumoxid.

13. Pigmentzubereitung nach mindestens einem der vorhergehenden Ansprüche, **dadurch gekennzeichnet, dass** sie zusätzlich andere Pigmente zur Eigenschaftssteuerung enthält.

14. Pigmentzubereitung nach Anspruch 13, **dadurch gekennzeichnet, dass** sie als zusätzliches Pigment Titandioxid zur Steuerung der Farbreinheit, Bismuthvanadat zur Steuerung der Farbsättigung und/oder Lithopone zur Steuerung des Aufhellungsgrades und/oder Zinn-Zink-Titanat (PY 216) enthält.

15. Pigmentzubereitung nach mindestens einem der vorhergehenden Ansprüche, **dadurch gekennzeichnet, dass** die Oberfläche der Teilchen, die die anorganischen und organischen Pigmente aufweisen, zusätzlich mit einer Siloxan- und/oder Silanbeschichtung zur Absenkung der Abrasivität und zur Verbesserung der Dispergierbarkeit versehen ist.

16. Pigmentzubereitung nach Anspruch 15, **dadurch gekennzeichnet, dass** die Siloxanbeschichtung auf einer Polysiloxanverbindung, insbesondere modifiziert mit Polyethersegmenten aufgebaut ist.

17. Pigmentzubereitung nach Anspruch 16, **dadurch gekennzeichnet, dass** die Polysiloxanverbindung und/oder Polysilane mit Alkyl- und/oder Arylgruppen versehen sind, wobei die Alkylgruppen insbesondere C₁-C₁₂-Alkylreste, vorzugsweise C₁-C₅-Alkylreste, darstellen, und der Arylrest auf eine Naphthyl-, Benzyl- und/oder Phenylgruppe zurückgeht.

18. Pigmentzubereitung nach einem der vorhergehenden Ansprüche, **dadurch gekennzeichnet, dass** die Menge an organischem makromolekularen Beschichtungsmaterial, bezogen auf den gesamten Pigmentanteil, zwischen etwa 0,1 und 10 Gew.-%, insbesondere zwischen etwa 0,2 und 6 Gew.-% liegt.

19. Verfahren zur Herstellung einer Pigmentzubereitung gemäß mindestens einem der vorhergehenden Ansprüche, **dadurch gekennzeichnet, dass** die Teilchen der anorganischen und organischen Pigmente, gegebenenfalls unter Zugabe von weiteren Komponenten, in Gegenwart einer oberflächenaktiven Substanz in Form einer makromolekularen organischen Verbindung nassvermahlen werden, die erhaltene wässrige Suspension getrocknet und desagglomeriert wird.

20. Verfahren nach Anspruch 19, **dadurch gekennzeichnet, dass** dem wässrigen Medium zusätzlich mit Wasser mischbare organische Lösungsmittel zur Einstellung der Oberflächenspannung und des Benetzungsverhaltens zugegeben werden.

21. Verwendung einer Pigmentzubereitung nach mindestens einem der Ansprüche 1 bis 18 zum Einfärben von beliebigen Materialien, insbesondere im Bereich der Lack- und Farben-, Papier-, Kunststoff-, Druckfarben- sowie Baustoffindustrie.

## Claims

1. Pigment preparation based on at least one inorganic pigment and at least one organic pigment, **characterised in that** the pigment preparation contains particles in which more finely divided organic pigment particles adhere to inorganic pigment particles and the particles have, in addition, an organic macromolecular coat.

2. Pigment preparation of claim 1, **characterised in that** it contains mixed-phase metal oxide pigments as inorganic pigment.

3. Pigment preparation according to claim 2, **characterised in that** it contains doped titanium dioxide pigments as mixed-phase metal oxide pigments.

4. Pigment preparation according to claim 3, **characterised in that** the doped titanium dioxide pigments are nickel-antimony-titanium oxide (C.I. Pigment Yellow 53) and/or chromium-antimony-titanium oxide (C.I. Pigment Brown 24).

5. Pigment preparation according to at least one of the preceding claims, **characterised in that** the average particle size of the inorganic particles ranges from about 0.08 to 10 µm, particularly from about 0.2 to 4 µm.

6. Pigment preparation according to at least one of the preceding claims, **characterised in that** the organic pigments are polycyclic and/or azo pigments.

7. Pigment preparation according to at least one of claims 1 to 6, **characterised in that** the red pigments are present in the form of DPP red (diketopyrrolopyrrole); the organic yellow pigments in the form of isoindolinone and/or benzimidazolone; the orange-pigments in the form of DPP-orange and/or isoindoline and/or benzimidazolone; the organic blue and green pigments as Cu-phthalocyanines; and the organic brown pigments as benzimidazolone and/or disazo-condensation compounds; and, in particular, the red, orange, and yellow pigments are to be associated with the following pigment classes; diketopyrrolopyrroles, quinacridones, benzimidazolones, disazo condensation products, isoindolines, isoindolinones, metal complexes as high performance pigments, as well as the following azo pigments: PY 65, PY 74, PY 83, PY 97, PY 116, PY 183, PY 190, PY 191, and PR 112 and PR 170.

8. Pigment preparation according to at least one of the preceding claims, **characterised in that** the particles of the organic pigments feature an average particle size of about 0.005 to 3 µm, particularly of about 0.05 to 0.3 µm, and therefore are smaller than the inorganic pigment particles by a factor of 3 to 40.

9. Pigment preparation according to at least one of the preceding claims, **characterised in that** the particles which contain the inorganic pigment particles with the finely divided organic pigment particles have an average particle size of about 0.3 to 10 µm, particularly of about 0.5 to 2.5 µm.

10. Pigment preparation according to at least one of the preceding claims, **characterised in that** per part of weight of organic pigment there are about 0.5 to 150 parts by weight of inorganic pigment, particularly about 1 to 15 parts by weight of inorganic pigments, when formulations of saturated color hues are prepared.

11. Pigment preparation according to at least one of the preceding claims, **characterised in that** per part of weight of organic pigment there are about 0.5 to 150 parts by weight of inorganic pigment, particularly about 20 to 100 parts by weight of inorganic pigment, when formulations of pastel colours are prepared.

12. Pigment preparation according to at least one of the preceding claims, **characterised in that** it additionally contains filler, particularly in the form of barium sulfate, talcum, silica, calcium carbonate, and/or aluminium oxide.

13. Pigment preparation according to at least one of the preceding claims, **characterised in that** it additionally contains other pigments for adjusting the characteristics.

14. Pigment preparation according to claim 13, **characterised in that** it contains titanium dioxide as additional pigment for controlling colour purity, bismuth vanadate for controlling colour saturation; and/or lithopone for controlling the degree of brightening and/or tin-zinc-titanate (PY 216).

15. Pigment preparation according to at least one of the preceding claims, **characterised in that** the surface of the particles which contain the inorganic and organic pigments, is additionally provided with siloxane and/or silane coat to reduce attrition by abrasion and to improve dispersability.

16. Pigment preparation according to claim 15, **characterised in that** the siloxane coat is based on a polysiloxane compound, particularly on one modified with polyether segments.

17. Pigment preparation according to claim 16, **characterised in that** the polysiloxane and/or polysilane compounds are provided with alkyl and/or aryl groups, wherein the alkyl groups are in particular C₁-C₁₂ alkyl radicals, preferably C₂-C₅ alkyl radicals, and the aryl group is derived from naphthyl, benzyl and/or phenyl groups.

18. Pigment preparation according to one of the preceding claims, **characterised in that**, referring to the total pigment fraction, the amount of organic macromolecular coating material ranges from about 0.1 to 10% by weight, and particularly from about 0.2 to 6% by weight.

19. Process for the preparation of a pigment preparation according to at least one of the preceding claims, **characterized in that** the particles of the inorganic and organic pigments, optionally upon addition of further components, are wet ground in the presence of a surfactant which is a macromolecular compound, and that the aqueous suspension thus obtained is dried and deagglomerated.

20. Process according to claim 19, **characterised in that** water-miscible organic solvents are added to the aqueous medium in order to adjust surface tension and wetting characteristics.

21. Use of a pigment composition according to at least one of claims 1 to 18 for dyeing any kind of material, particularly in the paint and varnish, paper, plastics, printing inks, and building material industries.

## Revendications

1. Préparation de pigments à base d'au moins un pigment inorganique et d'au moins un pigment organique, **caractérisée en ce que** la préparation de pigments contient des particules dans lesquelles des particules de pigment organique plus finement divisées adhèrent aux particules de pigment inorganique et les particules portent, en outre, une couche macromoléculaire organique.

2. Préparation de pigments suivant la revendication 1, **caractérisée en ce qu'**elle contient des pigments du type oxyde métallique à phase mixte comme pigment inorganique.

3. Préparation de pigments suivant la revendication 2, **caractérisée en ce qu'**elle contient des pigments du type dioxyde de titane dopé comme pigments du type oxyde métallique à phase mixte.

4. Préparation de pigments suivant la revendication 3, **caractérisée en ce que** les pigments du type dioxyde de titane dopé sont des pigments oxyde de nickel-antimoine-titane (C.I. Pigment Yellow 53) et/ou oxyde de chrome-antimoine-titane (C.I. Pigment Brown 24).

5. Préparation de pigments suivant au moins une des revendications précédentes, **caractérisée en ce que** la dimension moyenne de particule des particules inorganiques est comprise dans l'intervalle d'environ 0,08 à 10 µm, en particulier d'environ 0,2 à 4 µm.

6. Préparation de pigments suivant au moins une des revendications précédentes, **caractérisée en ce que** les pigments organiques sont des pigments polycycliques et/ou pigments azoïques.

7. Préparation de pigments suivant au moins une des revendications 1 à 6, **caractérisée en ce que** les pigments rouges sont présents sous forme de pigment rouge DPP (dicétopyrrolopyrrole) ; les pigments organiques jaunes sont présents sous forme d'isoindolinone et/ou de benzimidazolone ; les pigments orange sont sous forme de DPP-orange et/ou d'isoindoline et/ou de benzimidazolone ; les pigments organiques bleus et verts sont des Cu-phtalo-cyanines ; et les pigments organiques bruns sont des composés de benzimidazolone et/ou des composés de condensation disazoïques ; et, en particulier, les pigments rouge, orange et jaune doivent être associés aux catégories de pigments suivantes : dicétopyrrolopyrroles, quinacridones, benzimidazolones, produits de condensation disazoïques, isoindolines, isoindolinones, complexes métalliques comme pigments à hautes performances, et également aux pigments azoïques suivants : PY 65, PY 74, PY 83, PY 97, PY 116, PY 183, PY 190, PY 191 et PR 112 et PR 170.

8. Préparation de pigments suivant au moins une des revendications précédentes, **caractérisée en ce que** les particules des pigments organiques ont pour caractéristique une dimension moyenne de particule d'environ 0,005 à 3 µm, en particulier d'environ 0,05 à 0,3 µm et, en conséquence, sont plus petites que les particules de pigment inorganique d'un facteur de 3 à 40.

9. Préparation de pigments suivant au moins une des revendications précédentes, **caractérisée en ce que** les particules qui contiennent les particules de pigment inorganique avec les particules de pigment organique finement divisées ont une dimension moyenne de particule d'environ 0,3 à 10 µm, en particulier d'environ 0,5 à 2,5 µm.

10. Préparation de pigments suivant au moins une des revendications précédentes, **caractérisée en ce que**, par partie en poids de pigment organique, il existe environ 0,5 à 150 parties en poids de pigment inorganique, en particulier environ 1 à 15 parties en poids de pigment inorganique, lorsque des formulations ayant des teintes de couleur saturées sont préparées.

11. Préparation de pigments suivant au moins une des revendications précédentes, **caractérisée en ce que**, par partie en poids de pigment organique, il existe environ 0,5 à 150 parties en poids de pigment inorganique, en particulier environ 20 à 100 parties en poids de pigment inorganique, lorsque des formulations de couleurs pastel sont préparées.

12. Préparation de pigments suivant au moins une des revendications précédentes, **caractérisée en ce qu'**elle contient en outre une charge, en particulier sous forme de sulfate de baryum, de talc, de silice, de carbonate de calcium et/ou d'oxyde d'aluminium.

13. Préparation de pigments suivant au moins une des revendications précédentes, **caractérisée en ce qu'**elle contient en outre d'autres pigments pour l'ajustement des caractéristiques.

14. Préparation de pigments suivant la revendication 13, **caractérisée en ce qu'**elle contient du dioxyde de titane comme pigment supplémentaire pour ajuster la pureté de couleur, du vanadate de bismuth pour ajuster la saturation de couleur et/ou de la lithopone pour ajuster le degré d'avivage et/ou du titanate d'étain-zinc (PY 216).

15. Préparation de pigments suivant au moins une des revendications précédentes, **caractérisée en ce que** la surface des particules qui contiennent le pigment inorganique et le pigment organique est en outre munie d'une couche de siloxane et/ou de silane pour réduire l'usure par frottement par abrasion et pour améliorer la dispersibilité.

16. Préparation de pigments suivant la revendication 15, **caractérisée en ce que** la couche de siloxane est à base d'un polysiloxane, en particulier d'un polysiloxane modifié avec des segments polyéther.

17. Préparation de pigments suivant la revendication 16, **caractérisée en ce que** les polysiloxane et/ou polysilane sont munis de groupes alkyle et/ou aryle, dans lesquels les groupes alkyle sont en particulier des radicaux alkyle en C₁ à C₁₂, de préférence des radicaux alkyle en C₂ à C₅, et le groupe aryle est dérivé des groupes naphtyle, benzyle et/ou phényle.

18. Préparation de pigments suivant au moins une des revendications précédentes, **caractérisée en ce que**, par référence à la fraction de pigments totaux, la quantité de matière de revêtement macromoléculaire organique est comprise dans l'intervalle d'environ 0,1 à 10 % en poids, et en particulier d'environ 0,2 à 6 % en poids.

19. Procédé pour la préparation d'une préparation de pigments suivant au moins une des revendications précédentes, **caractérisé en ce que** les particules des pigments inorganique et organique, éventuellement avec addition de constituants supplémentaires, sont broyés à l'état humide en présence d'un agent tensioactif qui est un composé macromoléculaire, et **en ce que** la suspension aqueuse ainsi obtenue est séchée et désagglomérée.

20. Procédé suivant la revendication 19, **caractérisé en ce que** des solvants organiques miscibles à l'eau sont ajoutés au milieu aqueux afin d'ajuster la tension superficielle et les caractéristiques de mouillage.

21. Utilisation d'une composition de pigments suivant au moins une des revendications 1 à 18, pour colorer n'importe quel type de matière, en particulier dans les industries des peintures et des vernis, du papier, des matières plastiques, des encres d'impression et des matériaux de construction.
